(19) Europäisches Patentamt

European Patent Office

Office européen des brevets

(11) Publication number: 0 266 007 B1

## (12) EUROPEAN PATENT SPECIFICATION

(45) Date of publication of patent specification: 02.01.92   (51) Int. Cl.5: F16K 31/383

(21) Application number: 87202067.2

(22) Date of filing: 27.10.87

(54) Piston restraining construction of pressure reducing valve.

(30) Priority: 28.10.86 JP 166276/86 U

(43) Date of publication of application:
04.05.88 Bulletin 88/18

(45) Publication of the grant of the patent:
02.01.92 Bulletin 92/01

(84) Designated Contracting States:
BE CH DE ES FR GB GR IT LI NL SE

(56) References cited:
DE-A- 1 550 411
DE-B- 1 425 686
FR-A- 1 078 604
JP-Y-45 032 717

(73) Proprietor: T L V Co., Ltd.
881 Nagasuna Noguchi-cho
Kakogawa-shi Hyogo 675(JP)

(72) Inventor: Koyama, Mitsuhiro
2233-6 Shinzaike Hiraoka-cho
Kakogawa-shi Hyogo 675-01(JP)
Inventor: Oike, Tadashi
17-1, Nishigawara Kakogawa-cho
Kakogawa-shi Hyogo 675(JP)
Inventor: Yokoyama, Takeshi
238-3, Agata-cho
Ono-shi Hyogo 675-13(JP)

(74) Representative: Smulders, Theodorus A.H.J.,
Ir. et al
Vereenigde Octrooibureaux Nieuwe Parklaan
107
NL-2587 BP 's-Gravenhage(NL)

## Description

The present invention relates to a pressure reducing valve which is mounted in a piping system for vapor or compressed air to maintain the secondary fluid pressure at a constant set pressure, and more particularly, to an arrangement of the type in which the primary fluid pressure is exerted on the upper surface of a piston through a pilot valve which is opened and closed in response to the secondary pressure, and the piston is operated according to a pressure difference between said upper surface and the lower surface of the piston, the latter being exposed to the secondary side pressure, to open and close a main valve connected to the piston, wherein a clearance is formed between the said upper end surface of the piston and the inner wall surface of a body opposed to said upper end surface.

Description of the Prior Art

Generally, in a conventional pilot type pressure reducing valve, a clearance X1 between an upper end surface 101 of a piston 20 and an opposed inner wall surface 102 of a body is maintained to be approximately 10 mm, as shown in Fig. 2. A similar pressure reducing valve is disclosed in JP-Y-032717 (1970).

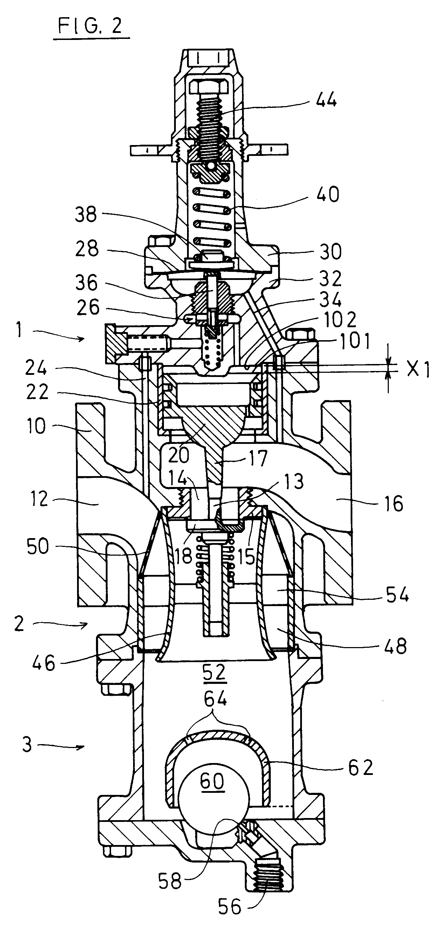

The conventional pressure reducing valve shown in Fig. 2 comprises a pressure reducing valve portion 1, a steam separator 2 and a drain valve portion 3. A body 10 is formed with an inlet 12, a valve port 14 and an outlet 16. The inlet is connected to a primary high pressure fluid source, and the outlet is connected to a secondary low pressure zone. The valve port 14 is defined by a valve seat member 15.

A main valve body 18 is arranged on the inlet side end of valve seat 15 surrounding the valve port 14 so that the main valve body 18 may be resiliently urged against seat 15 by a coil spring. A piston 20 is slidably arranged within a cylinder 22, and having a piston rod 17 in abutment with a rod 13 projecting centrally from the main valve body 18 into the valve port 14. The lower surface of the piston 20 and the piston rod 17 are interconnected by a substantially hemispherical surface. A pilot valve 26 is arranged in an upper space above the piston 20, that is, in a primary pressure passage 24 connecting the inlet 12 with a pilot valve piston chamber. A diaphragm 28 is mounted with its outer peripheral edge held between flanges 30 and 32. A space below the diaphragm 28 communicates with the outlet 16 through a secondary pressure passage 34. Ahead end of a valve stem 36 of the pilot valve 26 is placed in abutment with a central part of the lower surface of the diaphragm 28, and a pressure setting spring 40 for setting a certain pressure is placed in abutment with the upper surface of the diaphragm 28 through a spring seat 38. An adjusting screw 44 is mounted on the body 10 by screwing.

When the adjusting screw 44 is turned to the left or to the right, the resilient force for depressing the diaphragm 28 of the pressure setting spring 40 is varied. Using the resilient force of the pressure setting spring 40 as a reference value, the diaphragm 28 curves responsive to the secondary pressure acting on the lower surface thereof to displace the valve stem 36 so that the pilot valve 26 is opened and closed. As the result, the primary fluid pressure is introduced into the piston chamber of the pilot valve whereby the piston 20 as well as the main valve body 18 is displaced, and the fluid from the inlet 12 flows directly into the outlet 16 through the valve port 14. This is automatically operated so that when the secondary fluid pressure lowers, the valve port 14 opens whereas when the secondary fluid pressure rises, the valve port closes.

Below the valve port 14 is mounted a cylindrical baffle member 46, and an annular space 48 is formed between the baffle member 46 and the surrounding body 10. The upper portion of space 48 communicates with the inlet 12 through a cone-shaped screen 50 whereas the lower portion communicates with the upper portion of a drain valve chamber 52. The upper portion of the drain valve chamber 52 communicates with the valve port 14 through a central opening of the baffle member 46. A swirl vane 54 formed from an inclined wall is arranged in the annular space 48.

Accordingly, the fluid of the inlet 12 is deflected by the swirl vane 54 and swirled when the valve port 14 is opened to cause the fluid to pass through the annular space 48. The liquid is moved outside into impingement on the inner wall of the body therearound and flows down into the drain valve chamber 52, while light gas swirls in the central portion, passes from the central opening of the baffle member 46 towards the valve port 14 and flows away toward the outlet 16.

The drain valve chamber 52 is formed with a drain valve port 58 leading to a drain port 56. A spherical valve float 60 is displaceably housed in a float cover 62. A vent hole 64 is formed in the upper portion of the float cover 62.

Accordingly, the valve float 60 moves up and down according to a water level of the drain valve chamber 52 to open and close the drain valve port 58 to automatically discharge water accumulated in the drain valve chamber 52.

In the pressure reducing valve constructed as mentioned above, when the set pressure (secondary pressure) is substantially lower than the primary pressure, that is when the reduction ratio is too great, a remarkable rattling phenomenon occurs. Such too great reduction ratio is for example, where a primary pressure of 10 Kg/cm$^2$ is to be reduced to a set pressure of 2 Kg/cm$^2$ or less.

As established experimentally, when in the pressure reducing valve shown in Fig. 2 the screw is gradually lowered from a state wherein the diaphragm 28 is not depressed by the pressure setting spring 40 to a state wherein such depressing occurs, the pilot valve 26 starts to open. However, in the case where initially the primary pressure is 10 Kg/cm$^2$ and the secondary pressure is atmospheric pressure, when the pilot valve 26 starts to open, a high pressure primary vapor rapidly flows into the upper space of the piston 20 through the pilot valve 26, and the valve port 14 rapidly opens. At that time, a portion in the vicinity of the secondary side of the valve port 14 is momentarily at high pressure, and therefore the pilot valve 26 closes and consequently the valve port 14 rapidly closes. However, since the secondary pressure is low, pressure in the vicinity of the outlet 16 momentarily becomes lowered and therefore the pilot valve 26 rapidly opens again. This procedure is repeated and produces great shocks and noises.

Such objectable functioning of the pressure reducing valve results from the fact that the piston 20 is forced upwards by the jet flow of high pressure fluid flowing from the primary pressure side to the secondary pressure side of the main valve body, 18 following rapid opening of valve port 14, such that the piston impinging upon the inner wall surface 102 of the body opposed to the upper end surface 101 of the piston 20 with great impact, and when piston 20 moves down, the piston rod 17 again impinges upon the main valve body 18. As a result, problems occur such as deformation of the upper end surface of the piston 20, bending and breakage of the piston rod 17, and damages of the main valve body 18 and the valve seat surface of the main valve seat 15.

It is therefore a technical task of the present invention to reduce shocks even if the rattling occurs, and to minimize damage to movable parts around the piston 20.

From FR-A-1,078,604 it is known per se in an apparatus different from a pilot type pressure reducing valve, viz. a pressure fluid operated remote control device, to actuate a valve in a pressured air line by means of a piston which slides within a cylinder. The design is such that when commanding air is temporarily supplied the piston is lowered to push down said valve from its seat resulting in opening the air line. As soon as the air line is opened the commanding air stream may be interrupted because the piston will be kept down by the air pressure in said air line. In order to interrupt the air stream in the line commanding air should again be admitted during a short period of time. In this reference the piston is shown with a clearance at its top when in its upper position. Since, however, both the movements of piston are manually controlled no rattling of the piston will occur.

German Offenlegungsschrift 1,550,411 discloses a piston controlling a valve in a pressure line, wherein the piston in its upper position when the valve is closed, is in full contact with an overhead abutment. This reference, however, relates to a servo-mechanism comprising shift rods which when depressed, open passages connecting the low pressure side of the valve with the upper side of the piston. As in the French patent apparatus there are no circumstances that piston will rattle.

Since in the devices disclosed in these references the problem which underlies the subject invention does not occur the fact that they show either a clearance or no clearance at all above the piston in its upper position, has no bearing on the subject invention. Furthermore they do not disclose the specific limitation specified in the claim.

## SUMMARY OF THE INVENTION

The technical means of the present invention employed for solving the aforementioned technical task resides in the provision of a pilot type pressure reducing valve in which a main valve body and a main valve seat are operated to be opened and closed by regulating an operating pressure of a piston through a pilot valve which is operative to detect a secondary pressure, characterized in that in a state wherein the main valve body 18 is in contact with the main valve seat 15, a clearance between an upper end surface 101 of the piston 20 and an inner wall surface 102 of a body opposed to said surface is set between zero and 1 mm..

Even if a remarkable shock occurs in a piston portion due to a rattling phenomenon, its shock force is small because a possible amount of moving of the piston is very small. In addition, since the amount of moving of the piston is small also when moving down, the released kinetic energy is small and therefore the impact force on the main valve body is also very small.

## BRIEF DESCRIPTION OF THE DRAWINGS

Fig. 1 is a sectional view of a piston portion of a pressure reducing valve showing an embodiment of the present invention; and
Fig. 2 is a sectional view of a conventional pressure reducing valve.

## DETAILED DESCRIPTION OF THE PREFERRED EMBODIMENT

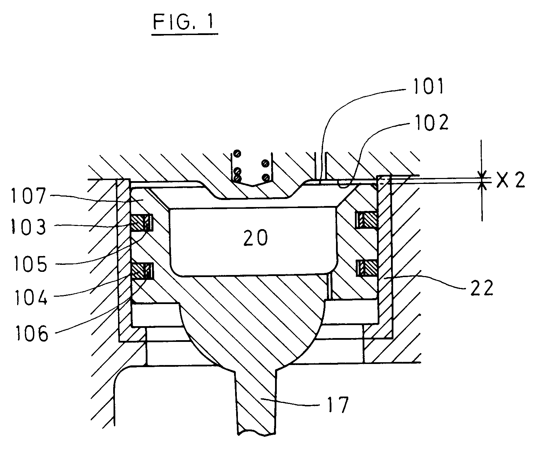

An embodiment showing a specific example of the aforementioned technical means will be described hereinafter (see Fig. 1).

Relevant parts of the improved pressure reducing valve corresponding to those shown in Fig. 2 are indicated in Fig. 1 by the same reference numerals as in Fig. 2.

Fig. 1 shows the state of the pressure reducing valve in which valve port 14 is closed. A clearance X2 between upper end surface 101 of piston 20 and inner wall surface 102 of a body is very small as shown in Fig. 2. In actual manufacture, the clearance X2 is set to approximately 0.5 mm taking into account working tolerances. Most preferably, the clearance X2 is close to zero.

Annular grooves are provided in the circumferential wall of the piston 20, and piston rings 103, 104 made of fluororesin are received therein. Resilient members 105, 106 urging the piston rings 103, 104 from the inside to the outside to enhance their slidability and sealing properties relative to the cylinder 22.

In the prior art shown in Fig. 2, since the clearance X1 is large, the impact force of the piston impinging upon the inner wall surface 102 of the body is great, and the peripheral portion 107 of the upper end of the piston is deformed downwardly thereby compressing the piston ring 103, thus deteriorating the sealing properties and slidability thereof. However, according to this invention, since the clearance X2 is small, the aforesaid phenomenon will not occur, and smooth functioning of the valve can be expected to continue for a long period of time.

Accordingly, even if rattling should occur, low vibration noises are generated, and the quiet operating state may be maintained without damaging the piston rod and the end surface of the piston. In addition, since the valve seat surface is not damaged, the characteristics specific to the improved pressure reducing valve, such as pressure characteristic, shutoff boosting, and the like, are maintained over an extended period.

## Claims

1. A pilot operated pressure reducing valve (1) comprising a main valve body (18) and a main valve seat (15) which are operated to be opened and closed by regulating an operating pressure of a piston (20) through a pilot valve (26) which is operable to detect a secondary pressure, a piston (20) restraining construction of a pressure reducing valve is characterized in that in a state wherein the main valve body (18) is in contact with the main valve seat (15), a clearance (X2) between an upper end surface (101) of the piston (20) and an inner wall surface (102) of a body opposed to said surface is set between a value close to zero and 1 mm..

## Revendications

1. Détendeur à commande par pilote (1) comprenant un corps de soupape principal (18) et un siège de soupape principal (15) qui sont actionnés pour être ouverts et fermés par la régulation d'une pression de service d'un piston (20) par l'intermédiaire d'une soupape pilote (26) servant à détecter une pression secondaire, un dispositif de guidage du piston (20) du détendeur, caractérisé en ce que, dans un état dans lequel le corps de soupape principal (18) est en contact avec le siège de soupape principal (15), l'intervalle (X2) entre la surface terminale supérieure (101) du piston (20) et la surface de paroi intérieure (102) d'un corps en vis-à-vis de ladite surface (101) est réglé entre une valeur proche de 0 et 1 mm.

## Patentansprüche

1. Vorgesteuertes Druckminderungsventil (1) mit einem Hauptventilkörper (18) und einem Hauptventilsitz (15), die geöffnet und geschlossen werden können, indem ein Vorsteuerventil (26) in Reaktion auf einen Sekundärdruck den Arbeitsdruck eines Kolbens (20) steuert, wobei eine Kolbenführungseinrichtung des Druckminderungsventil dadurch gekennzeichnet ist, daß in einem Zustand, in dem der Hauptventilkörper (18) den Hauptventilsitz (15) berührt, der Abstand (X2) zwischen einer oberen Stirnfläche (101) des Kolbens (20) und einer dieser Stirnfläche gegenüberliegenden Innenwandfläche (102) eines Körpers zwischen einem Wert nahe 0 mm und 1 mm eingestellt ist.

FIG. 1

<u>FIG. 2</u>